# EUROPEAN PATENT SPECIFICATION

(11) **EP 1 678 603 B1**
(45) Date of publication and mention of the grant of the patent: **06.05.2009**
(21) Application number: 04767136.7
(22) Date of filing: 27.10.2004
(51) Int. Cl.: G06F 9/44

(54) **VIEW ROUTING IN USER INTERFACE APPLICATIONS**
VIEW-ROUTING IN BENUTZEROBERFLÄCHEN-ANWENDUNGEN
ROUTAGE DE VUES DANS LES APPLICATIONS D'INTERFACE UTILISATEUR

(30) Priority: 27.10.2003 US 694568
(43) Date of publication of application: 12.07.2006
(73) Proprietor: Nokia Corporation, 02150 Espoo (FI)
(72) Inventor: HARTLEY, Stephen Michael, London, Greater London N8 7LH (GB)
(74) Representative: Simmelvuo, Markku Kalevi
(86) International application number: PCT/FI2004/000634
(87) International publication number: WO 2005/041027

(56) References cited:
- US-A- 5 737 557
- US-A- 6 002 398

## Description

### BACKGROUND OF THE INVENTION

### Field of the Invention

The invention relates to user interfaces in computing equipment. Particularly the invention relates to view routing in graphical user interfaces used in computer terminals.

### Brief Description of Related Developments

User friendliness is an important factor in all computer applications. Especially, it is of particular importance in applications targeted for average users and frequent use. Recently, graphical user interfaces and operating systems have made computer applications available for a large audience. In desktop and laptop computers the prevalent operating systems are presently the MICROSOFT® Windows and LINUX^{™}. The SYMBIAN^{™} operating system provides a graphical user interface and operating system for mobile devices and other similar hand-held devices.

In data entry applications where a user has to fill data pertaining to various entities there are two ways of organizing information to be filled: a data-oriented approach and a process-oriented approach. The data oriented approach is much simpler from the application designer point of view. There must be provided simply data entry forms by means of which the user is able to fill the data pertaining to the entities of interest. Usually, the data oriented approach is simplified by providing a set or sequence of data entry forms, which adheres to a process by which the data is gathered in real-life. Similarly, there is provided sequences of data enquiry and update forms, which adhere to processes in which the data is utilized and revised. However, the problem with the process-oriented approach is that there can be a wide variety of processes during which the data is gathered, utilized and updated. The problem is made worse by the fact that similar data must be handled in a variety of independent applications. It is important to be able to merge data retrieval and data entry steps from a multitude of applications into one logical sequence of steps. Typically, one step is represented by a given view in a given application. A view can be defined as a combination of a set of input user interface elements and a set of informational user interface elements. Input user interface elements are typically elements, which can be used to carry out a certain task, and they are normally used when user input is required. Such elements are, for example, radio buttons, checkboxes, input fields, "OK" and "Cancel"buttons etc. The informational user interface elements typically contain text and/or pictures and they are used for informing or instructing the user. For instance, in a contacts application there is one view for entering a search expression such as a search word and another view for displaying all the contacts that matched the search expression. In practice a view may typically appear as a user interface form or a window, which is displayed to the user. The view may also cover the entire screen. By way of example, let us consider a use case in SYMBIAN^{™} operating system environment where a user has obtained a new terminal and must enter the settings required for the operation of the terminal. Firstly, the user must set the time zone for the world clock service, which illustrates the time in different time zones. Secondly, the user must set the time in the same application. Thirdly, the user must specify her business card details in the contacts application. Fourthly, the user must specify the Internet access information in Internet access application. Fifthly, the user must specify the E-mail settings in messaging application.

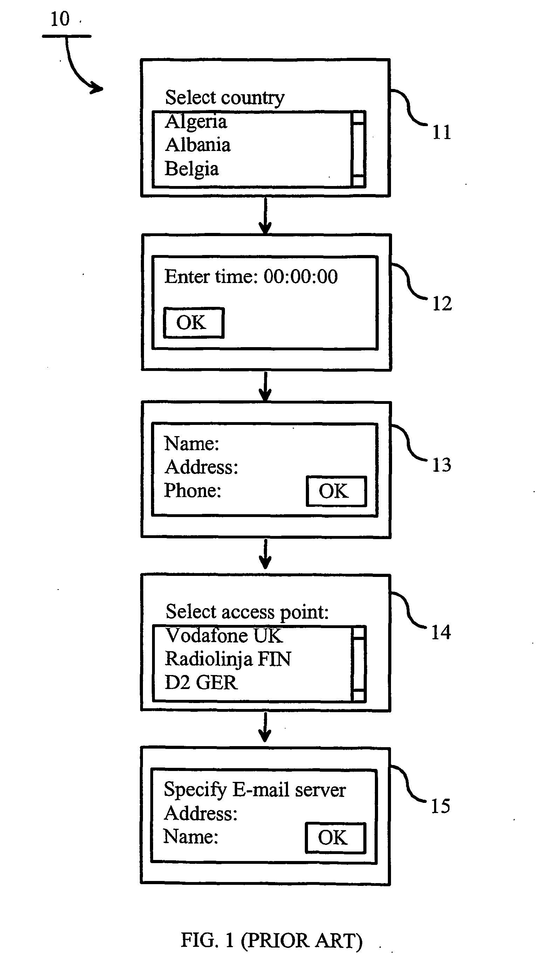

Reference is now made to Figure 1, which illustrates the aforementioned process for entering the settings pertaining to set-up of a new terminal that a user has purchased. Figure 1 illustrates the view sequence of a terminal set-up application. The user starts a set-up application or it is started automatically on behalf of the user. The set-up application invokes each necessary view one by one. The views invoked may be implemented in different applications. In step 11 the "World Clock" application is started at the view for location setting. The user must select the country she is in currently. When country has been selected from a scrolling list, "World Clock" application exits and returns the user selection to the terminal set-up application. In step 12 the "World Clock" application is started again and this time the view for time setting is launched. After the user has entered current time, the "World Clock" application exists and returns the user selection to the terminal set-up application. Processing proceeds similarly for each application and view to be launched by the terminal set-up application. In step 13 the "Contacts" application is started in turn from the view for specifying own card details. In step 14 the "Internet Access" application is started from the view for selecting the current General Packet Radio Service (GPRS) access point. In step 15 the "Messaging" application is started from the view for entering the information for E-mail server used comprising, for instance, server name and/or IP-address. When the user has entered information for E-mail server and pressed the "OK" button, "Internet Access" application exists and returns the information entered to the terminal set-up application.

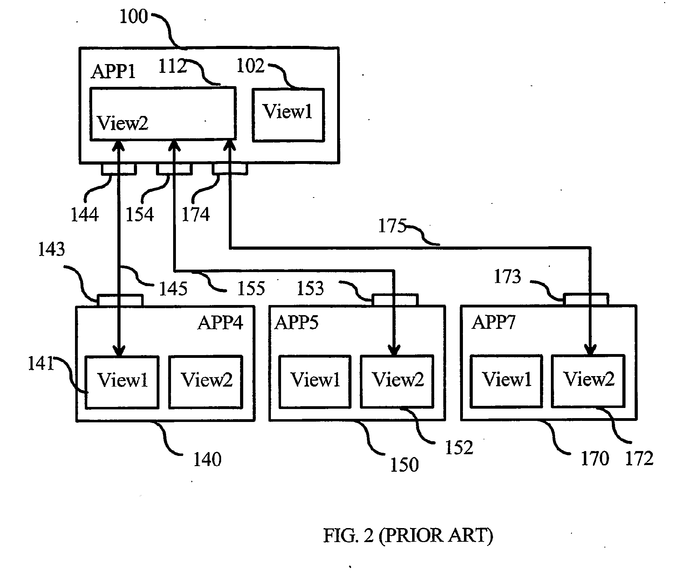

Reference is now made to Figure 2, which illustrates the aforementioned general pattern for invoking views one by one from a client application. In Figure 2 there is an application 100, which acts as a client application. There are three other applications, namely applications 140, 150 and 170. The views 141, 152 and 172 are going to be used from application 100. The views are launched by way of methods in interfaces 143, 153 and 173. Data is returned from the views by way of listener methods in interfaces 144, 154 and 174.

For example, in a view 112 there may be a button or other selection, which causes a digression in the filling of data for view 112. The digression results in the filling of data entry forms in views 141, 152, 172 and returning the information back to view 112. For example, the button may be provided for the user in order to check whether some pieces of information necessary for the execution of a command pertaining to view 112 have been defined earlier. For example, application 100 first launches view 141 in application 140 via interface 143, which results in the presentation of the user interface window or form associated with view 141. When view 141 exits, for instance, due to the selection of an "OK" command by the user, application 140 returns the data filled in by the user via a listener method in interface 145 to application 100. Essentially similar steps are repeated for view 152 within application 150 and view 172 within application 170.

Reference publication US 5,737,557 discloses a window based user interface for a personal computer. In the user interface the user is provided a number of software suites, which comprise a number of icons that represent program and data files. The suites correspond in principle to MICROSOFT® Windows 3.1 program groups. In association with the icons there is stored information regarding the location of the file corresponding to the icon. The suites enable operations to be performed upon all of the items represented in the software suite. There are problems associated with view chaining in user interface applications such as illustrated in Figure 2. Firstly, the view launch sequences must be hard-coded to the client application i.e. application 100 in Figure 2. Thus, there is no easy and flexible way of defining such view chains i.e. view routes between views. This means that program code must explicitly specify the sequence of the view launching. Should there be any need to change the sequence of view launching the program code for application 100 must be updated. An additional disadvantage is that if there is any change in the server applications i.e. applications 140, 150 and 170 in Figure 2, the client application has to be updated as well. For example, if data entry views pertaining to some information such as business cards are rearranged due to new features, every application that has used these views must be updated even though these applications would not take advantage of these new features.

Secondly, there is no easy way of returning data from a view to the application that launched the view. The server application must publish and implement a method interface for each view that it provides for the use of other applications. The other applications must call this method to launch the view. When the user has entered the data pertaining to the view and selected a command such as "OK", a method is called in the server application. This method in turn must call a listener method published and implemented by the client application. In other words, the interface is used in normal fashion familiar from object oriented programming to an expert on the field. This method is inflexible and static as mentioned before, because each change in the server application pertaining to the interface definitions causes the need to update the client application as well and vice versa. This may become a complex task in a system, which provides a multitude of applications that must be interconnected in numerous ways. The interconnection of applications generally avoids the problem of reinventing the wheel, that is, the input and processing of same data, for example, phonebook data, in applications other than the "Contacts" application.

Thirdly, it is not possible to introduce and launch entirely new view routes at run-time. What would be needed is a generic way of passing data between a client and a server application dynamically, which allows the updating of the views independently and the creation of new view routes.

### SUMMARY OF THE INVENTION

The invention is related a method as set forth in claim 1.

The invention relates also to an electronic device as set forth in claim 12.

The invention relates also to a computer program as set forth in claim 23.

In one embodiment of the invention, there is provided to a method for providing user interaction in an electronic device, which comprises at least a first application and a second application having at least one view associated with it. In the method a view route comprising at least one view is determined; the view route is passed to a view router from the first application; at least one view based on the view route is launched; and the first application is continued when at least part of the view route has been processed.

In one embodiment of the invention, there is provided a system, storing at least a first application and a second application having at least one view associated with it. The system comprises: means for determining a view route comprising at least one view; view router for processing the view route, launching at least one view based on the view route; and means for continuing the first application when at least part of the view route has been processed.

In one embodiment of the invention, there is provided an electronic device, storing at least a first application and a second application having at least one view associated with it. The electronic device comprises: means for determining a view route comprising at least one view; view router for processing the view route, launching at least one view based on said view route; and means for continuing the first application when at least part of the view route has been processed.

In one embodiment of the invention, there is provided a computer program comprising code adapted to perform the following steps when executed on a data-processing system: determining a view route comprising at least one view; passing the view route to a view router from a first application; launching at least one view associated with a second application based on the view route; and continuing the first application when at least part of the view route has been processed.

In one embodiment of the invention, the first application is continued when the view route has been processed. The completion of the view route may be determined by inspecting a view route list. In one embodiment of the invention exiting from a view launched may result in continuing the first application even if other views that have not been launched still remain in the view route.

In one embodiment of the invention, the method further comprises the gathering of data from the at least one view and the passing of the gathered data from the view router to the first application or a subsequent application in the view route. By a subsequent application in the view route is meant herein an application and a view that follows in the view route the view that has just exited and passed control back to the view router.

In one embodiment of the invention, the view route is defined as list comprising information identifying at least the second application and a view associated with it. Typically, the list comprises more than one entry. Each entry specifies an application, a view within the application and optionally a command associated with the view. The list may be a linked list of entries.

In one embodiment of the invention, the data gathered is organized into a journal list comprising an entry for each view in said view route. In one embodiment of the invention, the data gathered is organized into a list of type and value pairs. The data type and value pairs may be defined in a markup language format such as the extensible markup language (XML).

In one embodiment of the invention, the view router provides a generic interface with generic methods and acts as an adapter for returning information from the view launched to the first application or to a subsequent application in the view chain.

In one embodiment of the invention, the view router is implemented as library. In another embodiment of the invention, the view router is implemented as an own application.

In one embodiment of the invention, at least part of the view route is specified in the memory of an electronic device. The electronic device executes the first and second applications. The at least part of the view route may be specified in a memory area or location associated with the first application. The view route may be determined entirely based on information stored in the memory area or location. The view route may be updated or determined entirely based on user actions. The user actions may have been performed in the first application or some other application that precedes it. The memory area associated with the application is a buffer or a set of buffers to which the first application or the view router has access. The memory area may be located in a memory segment associated with the first application or in a segment belonging to another application to which first application has access.

In one embodiment of the invention, the computer has a graphical user interface. The graphical user interface may be based on, for example, SYMBIAN^{™} operating system, MICROSOFT® Windows or other operating system. The view may comprise user interface elements that may be associated with data entry or data display. The view may cover the entire display region or it may be in a separate window that is opened when the view is launched.

In one embodiment of the invention, the computer program is stored on a computer readable medium. The computer readable medium may be a removable memory card, magnetic disk, optical disk or magnetic tape.

In one embodiment of the invention, the electronic device is a mobile device, for example, a laptop computer, palmtop computer, mobile terminal or a Personal Digital Assistant (PDA). In one embodiment of the invention, the electronic device is a desktop computer or any other computing device.

The benefits of the invention are related to the improved flexibility in application user interface design. The invention provides a generic way of passing data between a client and a server application dynamically. The invention allows the updating of the views within a given application independently without needing to update other applications. For example, a client application can be updated without changing server applications from which the client application launches views. A change in one application does not automatically introduce the need to update other applications. Further, with the invention it is possible to define dynamically new view routes even during application execution time.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** is a block diagram illustrating a view sequence of a prior art terminal set-up application;
**Fig. 2** is a block diagram illustrating a prior art user interface application invoking a view route;
**Fig. 3** is a block diagram depicting a view router used by a user interface application, in accordance with the invention;
**Fig. 4** is a block diagram illustrating a data structure for defining a view route, in accordance with the invention;
**Fig. 5** is a block diagram illustrating a data structure for storing view route journal data, in accordance with the invention;
**Fig. 6** is a flow chart depicting one embodiment of view routing method using a view router of **Fig. 3****,** in accordance with the invention;
**Fig. 7** illustrates an electronic device, in accordance with the invention; and
**Fig. 8** illustrates a computer, in accordance with the invention.

### DETAILED DESCRIPTION OF THE PREFERRED EMBODIMENTS

Reference will now be made in detail to the embodiments of the present invention, examples of which are illustrated in the accompanying drawings.

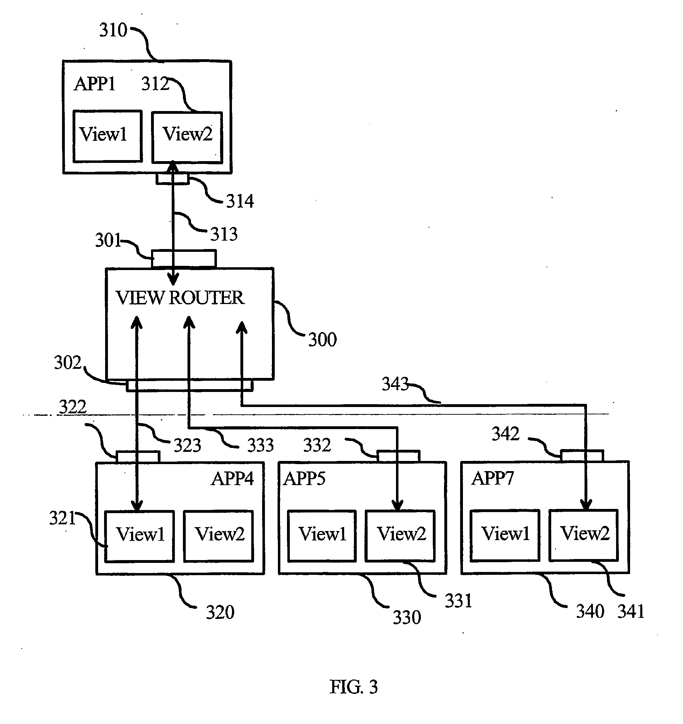

Figure 3 is a block diagram depicting a view router used by a user interface application in one embodiment of the invention. Application 310 is a user interface application, which needs to invoke a view chain i.e. view route wherein views in the view route are served by other applications. First, the view 312 is active and is displayed to a user. The view may comprise data entry fields, selection lists with scrolling bars, radio buttons and other similar user interface elements. View 312 also comprises a user interface element for giving an action command. The element may, for example, be a button, menu item or other control object. The selection of the element results in the processing of a view route. The view route may be specified in a memory area or location associated with application 310 or the view route is determined based on previous user actions in application 310 or elsewhere. Similarly, only part of the view route may be specified beforehand and other views may be added dynamically to the view route during the course of processing in application 310 or during the course of processing in any previously active application.

The view route in Figure 3 comprises view 321 from application 320, view 331 from application 330 and view 341 from application 340, in this order. The precise number of views, applications and views within one application is by no means restrictive and is only for illustrative purposes. Information on the view route desired is provided a view router 300 from application 310 by calling a general view route invocation method in the interface 301. The passing of information and invocation of methods between two applications is illustrated using arrows such as arrows 313, 323, 333 and 343. Initially the implementation of the method in view router 300 starts processing the view route information. The view route may have been determined by application 310 during run-time, depending on various conditions such as user expertise level and choices made earlier possibly in other applications. First, view router 300 launches view 321 in application 320 by calling a method associated with an interface 322. During this process user enters data into the user interface associated with view 321. When the user selects a user interface element that terminates view 321, for example an "OK" button, application 320 calls a listener method in interface 302 associated with view router 300. Before that application 320 may have stored to memory for future use some data that the user has entered. The listener method is a generic method, which means that it has the same parameters irrespective of the server application e.g. application 320, the client application, for example, application 310 and the view. In this way the details associated with the client application are hidden. When there are still views pending in the view route, view router 300 continues by launching a second view, namely view 331 within application 330 via an interface 332. In one embodiment of the invention application 330 is passed information gathered by application 320 such as data entered by the user. In general a view launched within an application is passed information gathered by the part of the view route that has already been processed. In this way an earlier view may pass information to a subsequent view. Hereafter, the processing continues until the whole view route has been processed.

When the whole view route has been processed, view router 300 calls a listener method in an interface 314 of application 310. In one embodiment of the invention the listener method provides information gathered by the view route to application 310. Some information entered by the user may be stored to memory only in application 310, whereas some information may be stored already in applications the views of which have been launched. In one embodiment of the invention, the information gathered by each view is collected into a journal list. It is up to application 310 or an application still in the view route to parse the information passed to it. By inspecting the journal list, application 310 or a view that still remains not launched in the view route is able to determine what information has been gather in each view already launched and processed.

There are two aspects, which need to be considered. First of all what the application that provides the service (from now on provider or server application) provides for other applications. And secondly what must the application taking advantage of other applications (from now on client application) service do. First of all, a server application, for example, 320 is responsible of implementing views, commands and data structures for both client application and provider. It must define, implement and export a specified header for the application. Setting a data or journal in the route is implemented as inline functions, which mean that no library is required to wrap the requested data into flat buffer.

The client application must of course know what data is needed for certain command and paths in the route. The provider on the other hand does not need to know or understand what other data or command in the path mean. It just needs to know how to handle the commands requested from it properly.

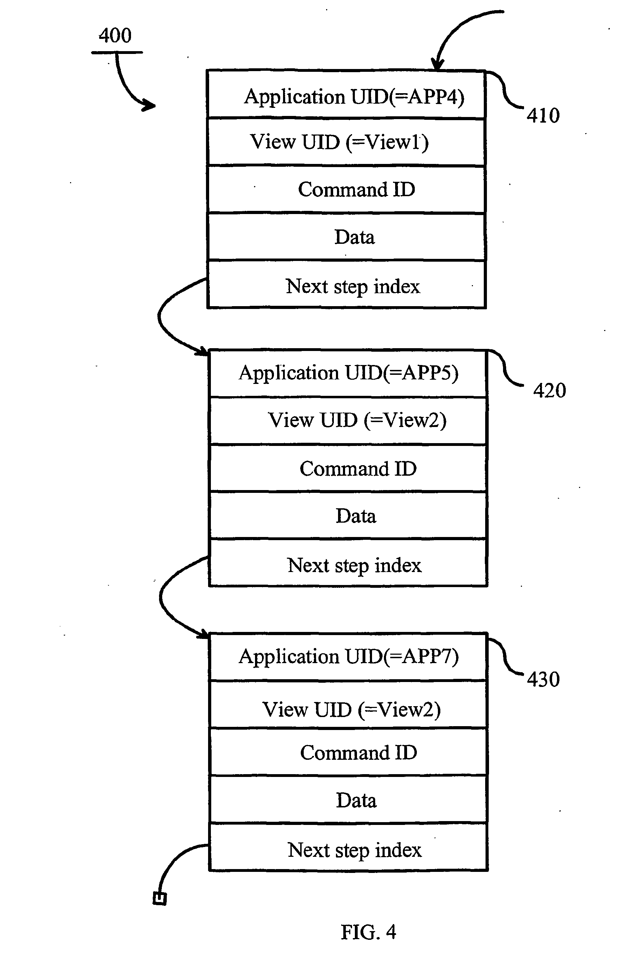

Figure 4 is a block diagram illustrating a data structure for defining a view route for a view router such as view router 300 of Figure 3 in one embodiment of the invention. The data structure is list 400. The list comprises entries 410, 420 and 430. Each entry specifies an Application UID, which is used by view router 300 to determine the application having the view to be launched. The view is identified using a View UID. If a command associated with the view is to be invoked in association with the launching, a Command ID specifies it. The command is typically a method associated with the view such as find. For example, the method may fetch data associated with a key identifier that is provided in association with the launching method call. The Data field comprises data to be passed to the view to be launched. The view to be launched is the one specified by Application UID and View UID. The Next Step Index field provides a pointer to a next entry in the view route list. In the last entry of the list Next Step Index field contains, for example, a null pointer. In one embodiment the view route information may be specified using an Extensible Markup Language (XML) document. In this embodiment, view router 300 parses the XML document to determine the view route.

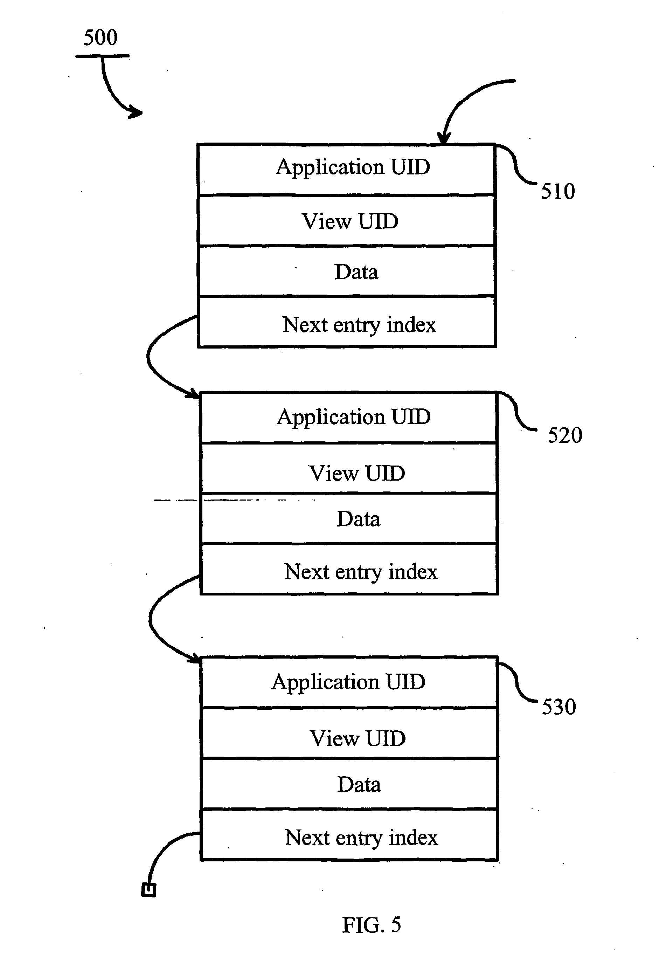

Figure 5 is a block diagram illustrating a data structure for storing view route journal data in one embodiment of the invention. The data structure is a list 500. The journal list contains the data returned from each application. There is an entry for each application. Figure 5 comprises entries 510, 520 and 530. An identifier Application UID specifies the application that left the data for the entry. An identifier View UID specifies the view within the application that left the data for the entry. The data to be returned is comprised in a Data field. The Next Step Index field provides a pointer to a next entry in the journal list. In the last entry this field contains, for example, a null pointer. Journal list is used to return data back to the calling application. It can contain any type of data and any number of journal entries.

In one embodiment of the invention, the journal list information may be specified using an Extensible Markup Language (XML) document. In this embodiment, a subsequent application in the view route or the client application e.g. application 310 in Figure 3 parses the XML document to determine the journal list. In one embodiment the journal data is not organized per application and view, but instead, per the type of data. This means that the journal comprises a set of type and value pairs. By inspecting the types present in the journal, application 310 of Figure 3 or a subsequent application in the view route is able to determine what data user has filled in. For example, if a type "phone number" is present, it indicates that user has filled in the phone number in one of the fields. Typically, the type and value pairs are provided in XML format.

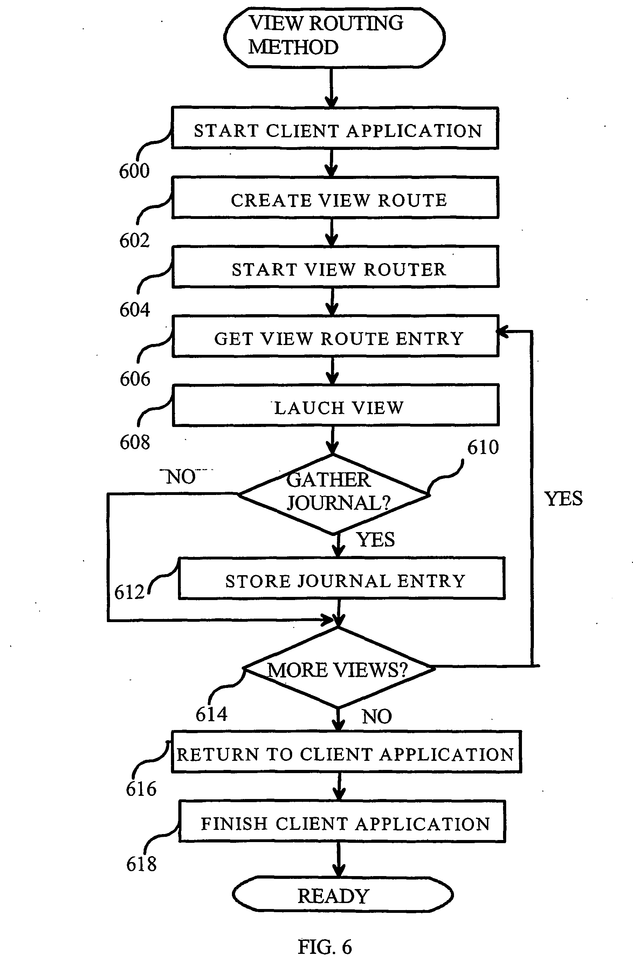

Figure 6 is a flow chart depicting one embodiment of view routing method using a view router of Figure 3. In step 600, a client application determines that it must start a view route. This is due to the previous selections of the user and some other conditions detected in application 310 of Figure 3. For example, if application 310 is a terminal set-up application such as depicted in Figure 1, it may have been determined in application 310 that the necessary user parameters do not exist.

In step 602, by inspecting the set of missing user parameters, application 310 determines what views must be launched in order to prompt the user for these parameters. Let us assume that application 310 determines that the view route must comprise view from applications 320, 330 and 340 as illustrated in Figure 3. In one embodiment of the invention, the determination of the view route may be even performed by some other application, which application 310 invokes for the task and which returns the determined view route back to application 310. The view route determiner application may perform the view determination based on missing information element types indicated by application 310. The view route may also be determined using information stored previously in memory. In one embodiment of the invention the view determination application is view router 300 of Figure 3. In step 604, application 310 invokes view router 300. In one embodiment of the invention view router is a library that has been linked to application 310. In another embodiment of the invention the view router is a separate application. Application 310 calls a method associated with interface 301. View router 300 is passed the view route information. In one embodiment of the invention, the view route is structured as illustrated in Figure 4. The view route is object is constructed by application 310. The actual construction occurs by way of method calls for adding views to the view route.

In step 606, view router 300 of Figure 3 extracts the information pertaining to next item in the view route entry list. For example, let us assume that the current view is view 321 within application 320. In step 608 view router 300 launches the view indicated in the current view route list entry. View router 300 utilizes the Application UID, View UID and Command ID parameters to determine how to launch the view. The Data parameter contents are passed to the view launched. In one embodiment of the invention, data gathered by the views processed earlier from the view route is passed to application the view of which is being launched. The data gathered is in the form of a journal entry list such as illustrated in Figure 5. In one embodiment of the invention, the view is launched so that a method associated with interface 322 is called. The Data parameter represents method parameters. There may be an additional parameter for the journal entry list. When the user has filled in some data to the view, application 320 obtains the data filled and returns at least part of them to view router 300. In one embodiment of the invention, some data entered by the user may be stored to memory already in application 320. Application 320 calls a listener method associated with interface 302. As show in Figure 3, the listener method and interface are similar for all applications and view in the view route. In this way they are not dependent on the application that invoked view router 300. In step 610, it is checked whether journal data is to be gathered by view router 300. In step 612 view router forms a journal entry pertaining to the data returned by application 320 to it.

In step 614, view router 300 determines, if there are more views in the view route. In one embodiment of the invention the determination comprises checking, if there are more entries in the view route list. In one embodiment of the invention, it is also determined whether it is in general necessary to continue processing views from the view route. For example, view router 300 may determine that the user has already entered all data required and that there is no need to process the remaining views in the view route. It is also equally possible that the user has made a choice during the processing of the last view, which indicates that there is no need to process more views from the view route. The choice may be, for example, that user decides to quit the information entry process pertaining to the view route. If there are more entries that are to be processed, the method continues in step 606.

In step 616, the data gathered by the views in the view route is returned to application 310. Even if all data entered by the user has been stored by the applications in the view chain some status in information may be returned to application 310. In one embodiment of the invention, the data gathered is in the form of a journal entry list such as illustrated in Figure 5. View router 300 calls a listener method in application 310 associated with interface 314. In this way control returns back to view 312 within application 310. In step 618, the client application finishes the tasks for which it needed the information collected by the views in the view route. Thereafter, client application is ended.

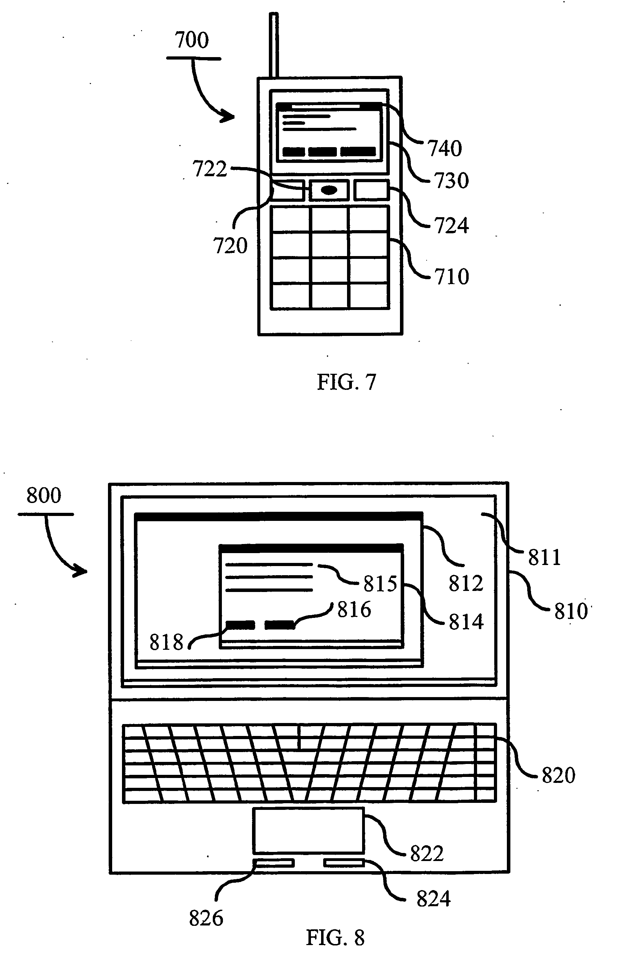

Figure 7 illustrates one embodiment of the invention where an electronic device 700 such as a mobile terminal utilizes the view routing method. The mobile device is organized to execute a computer program, which implements the functions associated with the invention disclosed herein. Electronic device 700 has keypad 710, function keys 720 and 724, a display 730 and a pointer device 722. Display 730 shows a graphical user interface 740 on which view pertaining to various applications is displayed. The view routing method of the invention is used to process view routes associated with graphical user interface 740. It should be noted that in other embodiments of the invention the mobile device has other types of displays, keyboards or other input devices and pointer devices. In one embodiment of the invention, the mobile device is connected to a mobile network, for example, a Universal Mobile Telecommunications Service (UMTS), a Global System of Mobile communications (GSM) network or a Wireless Local Area Network (WLAN).

Figure 8 illustrates one embodiment of the invention where a computer 800 utilizes the view routing method. The computer is organized to execute a computer program, which implements the functions associated with the invention disclosed herein. Computer 800 has display 810, a keyboard 820, a pointer device 822 with buttons 824 and 826. The display presents a graphical user interface 811. Graphical user interface 811 comprises windows 812 and 814. On window 814 there is a text field 815 and two command buttons 816 and 818. For example, window 814 may be a view launched in association with the processing of a view route in accordance with the invention. Even though in Figure 8 computer 800 resembles mostly a current laptop computer, the invention is applicable to desktop computers, handheld computers, palmtop computers and large workstations as well. The invention is applicable to any types of user interfaces, for example, text based user interfaces, graphical user interfaces and purely voice based user interfaces.

Next the invention is illustrated by way of some examples of use cases. A first use case demonstrates the simplicity of creating view routes and changing them.

Individual applications would support their own view switches to set-up data, such as location, clock, Internet access point, e-mail settings, etc. A device start-up application could create a view route consisting of:
<World Clock, Set Location, "">
<World Clock, Set Time, "">
<Internet access, Create new access point, "">
<Messaging, Create new setting, "E-Mail">
<Device Start-up, Finish, "">

The items above are of the format <Application Identifier, Command, Data >. The notation "" means no data is needed to be passed.

The World clock application would receive the view route and take the top item. It would then allow display the location view and request that the user selects a location. Once the user has selected one, then the application would ask the view routing code, that is, the view router to continue the route. This would lead to the World Clock being called again, but this time to set the time. Once the user has set the time, then again the World Clock application would ask the view router to go to the next view. This would lead to a view switch to the Internet access application, which then asks the user to create a new Internet access point. Once the user has created an access point, the Internet Settings application would ask the view router to go to the next view, which in this case is the Messaging application.

The Messaging application then asks the user to create a new email account and once done the Messaging application asks the view router to continue with the view route and this would lead back to the application that initiated the whole view route - the Device Start-up application.

The device start-up application receives the end view route message and knows that its request to the other applications is complete and so exits.

The second use case illustrates a need to add setting up of owner information after setting of the time. By using the view router, this is easy. The route is just changed to:
<World Clock, Set Location, "">
<World Clock, Set Time, "">
<Contacts, Set Contact details, "Own card">
<Internet access, Create new access point, "">
<Messaging, Create new setting, "E-Mail">
<Device Start-up, Finish, "">

No application other than the caller needs to be changed. This time after the world clock application has finished setting the time, the contacts application is switched to and the personal details entered.

The contacts application then asks the view router to continue to the next view, which is the Internet access point application.

The third use case illustrates the passing of data between applications. Suppose you want to ask the user to select a note document and then put the text into the word processing application. One way to do that would be with the word processing application creating and launching the following view route:
<Note taker, Select document, "", "">
<Word processor, Insert text, "", "">

The format above is <Application, Command, Data for command, Data returned from previous command>. So once the note application has made the user select a note, the remaining view route would be:
<Word processor, Insert text, "", text from note>

The note application has added data to the next view route entry without needing to know anything about it. The note application would see that the view route is not empty and ask the view router to continue the view route, which now also has the data passed from the notes application. This would cause the view to switch back to the word processing application and it would insert the text into the current document.

Fourth use case illustrates extended data passing. Suppose you now want to translate the note into French before it gets inserted into the word processor. One way to achieve that would be with the word processor creating the following view route:
<Note taker, Select document, "", "">
<Translator, Translate text, "French", "">
<Word processor, Insert text, "", "">

After the notes application is finished selecting a note, the view route would be:
<Translator, Translate text, "French", notes text>
<Word processor, Insert text, "", "">

It would then call the view router to continue the view route, which would switch to the translator to do the translation.

Once the user has confirmed the translation, the view route would look like:
<Word processor, Insert text, "", translated text>

The translation application would conclude that the route was not empty and ask the view router to continue the view route, which would switch to the Word processor and insert the translated text.

At no point during the route did the switched to applications need to be aware of what was next in the view route. They only had to know what data to pass on from the view switch, which they themselves define.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method of providing user interaction implemented in an electronic device (700, 800), comprising at least a first application (320) and a second application (330), said second application comprising at least one view, each said at least one view comprising a combination of a set of input user interface elements and a set of informational user interface elements each said at least one view being associated with said second application, wherein said at least one view is presented to a user, **characterized in that**
a view list (400, 500) is determined comprising said at least one view;
said view list (400, 500) is passed to a view router (300) from said first application (320);
said view router (300) launching said at least one view comprised in said view list (400, 500) in said second application, said launching resulting in presenting the elements of said at least one view, and
said first application (310) is continued when at least part of said view list has been processed.

2. The method according to claim 1, the method further comprising:
gathering data from said at least one view; and passing said data from said view router (300) to said first application (320) or to a subsequent application in said view list (400, 500).

3. The method according to claim 1, wherein said view list (400, 500) comprises information identifying at least one application (320) and a view associated therewith.

4. The method according to claim 2, wherein said data is organized into a journal list comprising an entry for each view in said view list (400, 500).

5. The method according to claim 2, wherein said data is organized into a list of type and value pairs.

6. The method according to claim 5, wherein said data type and value pair are in a markup language format.

7. The method according to claim 1, wherein said electronic device (700, 800) has a graphical user interface (740, 840).

8. The method according to claim 8, wherein a view is a window opened during said presenting step.

9. The method according to claim 1, wherein said electronic device (700, 800) is a SYMBIAN^{™} operating system device.

10. The method according to claim 1, wherein at least part of said list is specified in the memory of said electronic device (700, 800).

11. The method according to claim 1, wherein said list is determined based on user actions.

12. An electronic device (700, 800), comprising means adapted to run at least a first application (320) and a second application (330), said second application comprising at least one view, each said at least one view comprising a combination of a set of input user interface elements and a set of informational user interface elements, each said at least one view being associated with said second application, said electronic device being configured to present said at least one view to a user, **characterized in that** the electronic device comprises:
means for determining a view list (400, 500) comprising said at least one view;
means for passing said view list (400, 500) to a view router (300);
means adapted to run said view router (300) configured to obtain said view list (400, 500) and to launch said at least one view comprised in said view list (400, 500), in said second application, said launching resulting in presenting the elements of said at least one view and
means for continuing said first application (310) when at least part of said list (400, 500) has been processed.

13. The electronic device according to claim 12, wherein said view router (300) gathers data from said at least one view in said view list and passes said data to said first application (320) or to a subsequent application (330) in said view list.

14. The electronic device according to claim 12, wherein said view list comprises information identifying at least an application and a view associated therewith.

15. The electronic device according to claim 13, wherein said data is organized into a journal list comprising an entry for each view in said view list (400, 500).

16. The electronic device according to claim 13, wherein said data is organized into a list of type and value pairs.

17. The electronic device according to claim 13, wherein said data type and value pair are in markup language format.

18. The electronic device according to claim 12, wherein said electronic device (700, 800) has a graphical user interface.

19. The electronic device according to claim 12, wherein a view is comprised in a window (840).

20. The electronic device according to claim 12, wherein said electronic device is a SYMBIAN^{™} operating system device.

21. The electronic device according to claim 12, wherein at least part of said list is specified in the memory area of said electronic device.

22. The electronic device according to claim 12, wherein said list is determined based on user actions.

23. A computer program comprising a first application (320) and a second application (330), said second application comprising at least one view, each said at least one view comprising a combination of a set of input user interface elements and a set of informational user interface elements, each said at least one view being associated with said second application, and **characterized in that** the computer program is adapted to perform the following steps when executed on a data-processing system:
determining a view list (400, 500) comprising said at least one view;
passing said view list to a view router (300) from said first application (310);
launching said at least one view comprised in said view list (400, 500) in said second application, said launching resulting in presenting the elements of said at least one view, and
continuing said first application when at least part of said view list (400, 500) has been processed.

24. The computer program according to claim 23, wherein said computer program is stored on a computer readable medium.

25. The computer program according to claim 23, wherein said computer readable medium is a removable memory card.

26. The computer program according to claim 23, wherein said computer readable medium is a magnetic or optical disk.

27. The computer program according to claim 23, further adapted to perform the following steps when executed on said data-processing system:
gathering data from said at least one view in said view list (400,500); and passing said data from said view router to said first application (310) or to a subsequent application (330) in said list.

28. The computer program according to claim 27, wherein said view list comprises information identifying at least one application and a view associated therewith.

29. The computer program according to claim 27, wherein said data is organized into a journal list comprising an entry for each view in said view list (400, 500).

30. The computer program according to claim 27, wherein said data is organized into a list of type and value pairs.

31. The computer program according to claim 30, wherein said data type and value pair are in a markup language format.

32. The computer program according to claim 23, wherein said computer program has a graphical user interface (840).

33. The computer program according to claim 32, wherein a view is a window (840) opened during said presenting step.

34. The computer program according to claim 23, wherein at least part of said view list is specified in the memory of an electronic device.

35. The computer program according to claim 23, wherein said view list is determined based on user actions.

36. The computer program according to claim 23, wherein said computer program is designed for a SYMBIAN^{™} operating system device.

37. The computer program according to claim 23, wherein said view router (300) is comprised in a library.

38. The computer program according to claim 23, wherein said view router (300) is an application.

## Patentansprüche

1. Verfahren zur Bereitstellung einer Benutzer-Interaktion, das in einem elektronischen Gerät (700, 800) implementiert ist und das wenigstens eine erste Anwendung (320) und eine zweite Anwendung (330) umfasst, wobei die zweite Anwendung wenigstens eine Ansicht umfasst und wobei jede dieser wenigstens einen Ansichten eine Kombination aus einem Satz von Benutzer-Schnittstellenelementen zur Eingabe und einem Satz von Benutzer-Schnittstellenelementen zur Information umfasst, wobei jede der wenigstens einen Ansichten zur zweiten Anwendung gehört und wobei die wenigstens eine Ansicht einem Benutzer dargestellt wird, **dadurch gekennzeichnet, dass**
eine Ansichtsliste (400, 500) bestimmt wird, die diese wenigstens eine Ansicht umfasst;
die Ansichtsliste (400, 500) von der ersten Anwendung (320) an einen Ansichtsrouter (300) übergeben wird;
der Ansichtsrouter (300) die in der Ansichtsliste (400, 500) enthaltene wenigstens eine Ansicht in der zweiten Anwendung startet, wobei das Starten dazu führt, dass die Elemente der wenigstens einen Ansicht dargestellt werden; und
die erste Anwendung (310) fortgeführt wird, wenn wenigstens ein Teil der Ansichtsliste verarbeitet wurde.

2. Verfahren nach Anspruch 1, wobei das Verfahren außerdem folgendes umfasst:
Sammeln von Daten von der wenigstens einen Ansicht; und Übergeben dieser Daten vom Ansichtsrouter (300) an die erste Anwendung (320) oder an eine nachfolgende Anwendung in der Ansichtsliste (400, 500).

3. Verfahren nach Anspruch 1, wobei die Ansichtsliste (400, 500) Informationen beinhaltet, die wenigstens eine Anwendung (320) und eine damit verbundene Ansicht kennzeichnen.

4. Verfahren nach Anspruch 2, wobei die Daten in einer Protokollliste organisiert sind, die einen Eintrag für jede Ansicht in der Ansichtsliste (400, 500) umfasst.

5. Verfahren nach Anspruch 2, wobei die Daten in einer Liste von Typ und Wert Paaren organisiert sind.

6. Verfahren nach Anspruch 5, wobei die Typ und Wert Datenpaare in einem Auszeichnungssprachformat (markup language) vorliegen.

7. Verfahren nach Anspruch 1, wobei das elektronische Gerät (700, 800) eine graphische Benutzerschnittstelle (740, 840) hat.

8. Verfahren nach Anspruch 8, wobei eine Ansicht ein Fenster ist, das während des Darstellungsschritts geöffnet wird.

9. Verfahren nach Anspruch 1, wobei das elektronische Gerät (700, 800) ein Gerät mit einem SYMBIAN^{™} Betriebssystem ist.

10. Verfahren nach Anspruch 1, wobei wenigstens ein Teil der Liste im Speicher des elektronischen Geräts (700, 800) festgelegt ist.

11. Verfahren nach Anspruch 1, wobei die Liste basierend auf Benutzeraktionen festgelegt wird.

12. Elektronisches Gerät (700, 800) Mittel umfassend, die dafür eingerichtet sind, wenigstens eine erste Anwendung (320) und eine zweite Anwendung (330) auszuführen, wobei die zweite Anwendung wenigstens eine Ansicht umfasst und wobei jede dieser wenigstens einen Ansichten eine Kombination aus einem Satz von Benutzer-Schnittstellenelementen zur Eingabe und einem Satz von Benutzer-Schnittstellenelementen zur Information umfasst, wobei jede der wenigstens einen Ansichten zur zweiten Anwendung gehört, wobei das elektronische Gerät dafür eingerichtet ist, die wenigstens eine Ansicht einem Benutzer anzuzeigen, **dadurch gekennzeichnet, dass** das elektronische Gerät folgendes umfasst:
Mittel zum Bestimmen einer Ansichtsliste (400, 500), die die wenigstens eine Ansicht umfasst;
Mittel zum Übergeben der Ansichtsliste (400, 500) an einen Ansichtsrouter (300);
Mittel, die dafür eingerichtet sind, den Ansichtsrouter (300) auszuführen, der dafür eingerichtet ist, die Ansichtsliste (400, 500) zu empfangen und die wenigstens eine in der Ansichtsliste (400, 500) enthaltene Ansicht in der zweiten Anwendung zu starten, wobei das Starten dazu führt, dass die Elemente der wenigstens einen Ansicht dargestellt werden; und
Mittel zum Fortführen der ersten Anwendung (310), wenn wenigstens ein Teil der Liste (400, 500) verarbeitet wurde.

13. Elektronisches Gerät nach Anspruch 12, wobei der Ansichtsrouter (300) Daten von der wenigstens einen Ansicht in der Ansichtsliste sammelt und diese Daten an die erste Anwendung (320) oder eine nachfolgende Anwendung (330) in der Ansichtsliste übergibt.

14. Elektronisches Gerät nach Anspruch 12, wobei die Ansichtsliste Informationen beinhaltet, die wenigstens eine Anwendung und eine damit verbundene Ansicht kennzeichnen.

15. Elektronisches Gerät nach Anspruch 13, wobei die Daten in einer Protokollliste organisiert sind, die einen Eintrag für jede Ansicht in der Ansichtsliste (400, 500) umfasst.

16. Elektronisches Gerät nach Anspruch 13, wobei die Daten in einer Liste von Typ und Wert Paaren organisiert sind.

17. Elektronisches Gerät nach Anspruch 13, wobei die Typ und Wert Datenpaare im Auszeichnungssprachformat (markup language) vorliegen.

18. Elektronisches Gerät nach Anspruch 12, wobei das elektronische Gerät (700, 800) eine graphische Benutzerschnittstelle hat.

19. Elektronisches Gerät nach Anspruch 12, wobei eine Ansicht in einem Fenster (840) enthalten ist.

20. Elektronisches Gerät nach Anspruch 12, wobei das elektronische Gerät ein Gerät mit einem SYMBIAN^{™} Betriebssystem ist.

21. Elektronisches Gerät nach Anspruch 12, wobei wenigstens ein Teil der Liste im Speicherbereich des elektronischen Geräts festgelegt ist.

22. Elektronisches Gerät nach Anspruch 12, wobei die Liste basierend auf Benutzeraktionen festgelegt wird.

23. Computerprogramm, das eine erste Anwendung (320) und eine zweite Anwendung (330) umfasst, wobei die zweite Anwendung wenigstens eine Ansicht umfasst, wobei jede dieser wenigstens einen Ansichten eine Kombination aus einem Satz von Benutzer-Schnittstellenelementen zur Eingabe und einem Satz von Benutzer-Schnittstellenelementen zur Information umfasst, wobei jede der wenigstens einen Ansichten zur zweiten Anwendung gehört, **dadurch gekennzeichnet, dass** das Computerprogramm dafür eingerichtet ist, die folgenden Schritte auszuführen, wenn es auf einem Datenverarbeitungssystem ausgeführt wird:
Bestimmen einer Ansichtsliste (400, 500), die die wenigstens eine Ansicht umfasst;
Übergeben der Ansichtsliste von der ersten Anwendung (310) an einen Ansichtsrouter (300);
Starten der wenigstens einen in der Ansichtsliste (400, 500) enthaltenen Ansicht in der zweiten Anwendung, wobei das Starten dazu führt, dass die Elemente der wenigstens einen Ansicht dargestellt werden; und
Fortführen der ersten Anwendung, wenn wenigstens ein Teil der Ansichtsliste (400, 500) verarbeitet wurde.

24. Computerprogramm nach Anspruch 23, wobei das Computerprogramm in einem Computer lesbaren Medium gespeichert ist.

25. Computerprogramm nach Anspruch 23, wobei das Computer lesbare Medium eine auswechselbare Speicherkarte ist.

26. Computerprogramm nach Anspruch 23, wobei das Computer lesbare Medium eine magnetische oder optische Speicherplatte ist.

27. Computerprogramm nach Anspruch 23, das außerdem dafür eingerichtet ist, die folgenden Schritte auszuführen, wenn es auf dem Datenverarbeitungssystem ausgeführt wird:
Sammeln von Daten von der wenigstens einen Ansicht in der Ansichtsliste (400, 500); und Übergeben dieser Daten vom Ansichtsrouter an die erste Anwendung (310) oder an eine nachfolgende Anwendung (330) in der Liste.

28. Computerprogramm nach Anspruch 27, wobei die Ansichtsliste Informationen beinhaltet, die wenigstens eine Anwendung und eine damit verbundene Ansicht kennzeichnen.

29. Computerprogramm nach Anspruch 27, wobei die Daten in einer Protokollliste organisiert sind, die einen Eintrag für jede Ansicht in der Ansichtsliste (400, 500) umfasst.

30. Computerprogramm nach Anspruch 27, wobei die Daten in einer Liste von Typ und Wert Paaren organisiert sind.

31. Computerprogramm nach Anspruch 30, wobei die Typ und Wert Datenpaare in einem Auszeichnungssprachformat (markup language) vorliegen.

32. Computerprogramm nach Anspruch 23, wobei das Computerprogramm eine graphische Benutzerschnittstelle (840) hat.

33. Computerprogramm nach Anspruch 32, wobei eine Ansicht ein Fenster (840) ist, das während des Darstellungsschritts geöffnet wird.

34. Computerprogramm nach Anspruch 23, wobei wenigstens ein Teil der Ansichtsliste im Speicher eines elektronischen Geräts festgelegt ist.

35. Computerprogramm nach Anspruch 23, wobei die Liste basierend auf Benutzeraktionen festgelegt wird.

36. Computerprogramm nach Anspruch 23, wobei das Computerprogramm für ein Gerät mit SYMBIAN^{™} Betriebssystem konzipiert ist.

37. Computerprogramm nach Anspruch 23, wobei der Ansichtsrouter (300) in einer Bibliothek enthalten ist.

38. Computerprogramm nach Anspruch 23, wobei der Ansichtsrouter (300) eine Anwendung ist.

## Revendications

1. Procédé destiné à assurer une interaction utilisateur installée dans un dispositif électronique (700, 800), comprenant au moins une première application (320) et une deuxième application (330), ladite deuxième application comprenant au moins une vue, chaque dite au moins une vue comprenant une combinaison d'un ensemble d'éléments d'interface utilisateur d'entrée et un ensemble d'éléments d'interface utilisateur informationnels, chaque dite au moins une vue étant associée à ladite deuxième application, dans lequel ladite au moins une vue est présentée à un utilisateur, **caractérisé en ce que :**
il est déterminé une liste de vues (400, 500) comprenant ladite au moins une vue ;
ladite liste de vues (400, 500) est passée à un routeur de vues (300) à partir de ladite première application (320) ;
ledit routeur de vues (300) lançant ladite au moins une vue comprise dans ladite liste de vues (400, 500) dans ladite deuxième application, ledit lancement engendrant la présentation des éléments de ladite au moins une vue ; et
ladite première application (310) est continuée lorsqu'au moins une partie de ladite liste de vues a été traitée.

2. Procédé selon la revendication 1, le procédé comprenant en outre les étapes consistant à :
recueillir des données de ladite au moins une vue ; et passer lesdites données dudit routeur de vues (300) à ladite première application (320) ou à une application suivante dans ladite liste de vues (400, 500).

3. Procédé selon la revendication 1, dans lequel ladite liste de vues (400, 500) comprend des informations identifiant au moins une application (320) et une vue qui lui est associée.

4. Procédé selon la revendication 2, dans lequel lesdites données sont organisées dans une liste de journal comprenant une entrée pour chaque vue dans ladite liste de vues (400, 500).

5. Procédé selon la revendication 2, dans lequel lesdites données sont organisées dans une liste de paires de type et de valeur.

6. Procédé selon la revendication 5, dans lequel lesdites paires de type et de valeur de données sont dans un format de langage de marquage.

7. Procédé selon la revendication 1, dans lequel ledit dispositif électronique (700, 800) a une interface utilisateur graphique (740, 840).

8. Procédé selon la revendication 8, dans lequel une vue est une fenêtre ouverte au cours de ladite étape de présentation.

9. Procédé selon la revendication 1, dans lequel ledit dispositif électronique (700, 800) est un dispositif à système d'exploitation SYMBIAN^{™}.

10. Procédé selon la revendication 1, dans lequel au moins une partie de ladite liste est spécifiée dans la mémoire dudit dispositif électronique (700, 800).

11. Procédé selon la revendication 1, dans lequel ladite liste est déterminée sur la base d'actions d'utilisateur.

12. Dispositif électronique (700, 800), comprenant des moyens aptes à exécuter au moins une première application (320) et une deuxième application (330), ladite deuxième application comprenant au moins une vue, chaque dite au moins une vue comprenant une combinaison d'un ensemble d'éléments d'interface utilisateur d'entrée et un ensemble d'éléments d'interface utilisateur informationnels, chaque dite au moins une vue étant associée à ladite deuxième application, ledit dispositif électronique étant configuré pour présenter ladite au moins une vue à un utilisateur, **caractérisé en ce que** ledit dispositif électronique comprend :
des moyens pour déterminer une liste de vues (400, 500) comprenant ladite au moins une vue ;
des moyens pour passer ladite liste de vues (400, 500) à un routeur de vues (300) ;
des moyens aptes à exécuter ledit routeur de vues (300) configuré pour obtenir ladite liste de vues (400, 500) et pour lancer ladite au moins une vue comprise dans ladite liste de vues (400, 500) dans ladite deuxième application, ledit lancement engendrant la présentation des éléments de ladite au moins une vue ; et
des moyens pour continuer ladite première application (310) lorsqu'au moins une partie de ladite liste de vues (400, 500) a été traitée.

13. Dispositif électronique selon la revendication 12, dans lequel ledit routeur de vues (300) recueille des données de ladite au moins une vue dans ladite liste de vues et passe lesdites données à ladite première application (320) ou à une application suivante (330) dans ladite liste de vues.

14. Dispositif électronique selon la revendication 12, dans lequel ladite liste de vues comprend des informations identifiant au moins une application et une vue qui lui est associée.

15. Dispositif électronique selon la revendication 13, dans lequel lesdites données sont organisées dans une liste de journal comprenant une entrée pour chaque vue dans ladite liste de vues (400, 500).

16. Dispositif électronique selon la revendication 13, dans lequel lesdites données sont organisées dans une liste de paires de type et de valeur.

17. Dispositif électronique selon la revendication 13, dans lequel lesdites paires de type et de valeur de données sont dans un format de langage de marquage.

18. Dispositif électronique selon la revendication 12, dans lequel ledit dispositif électronique (700, 800) a une interface utilisateur graphique.

19. Dispositif électronique selon la revendication 12, dans lequel une vue est comprise dans une fenêtre (840).

20. Dispositif électronique selon la revendication 12, dans lequel ledit dispositif électronique est un dispositif à système d'exploitation SYMBIAN^{™}.

21. Dispositif électronique selon la revendication 12, dans lequel au moins une partie de ladite liste est spécifiée dans la zone de mémoire dudit dispositif électronique.

22. Dispositif électronique selon la revendication 12, dans lequel ladite liste est déterminée sur la base d'actions d'utilisateur.

23. Programme informatique comprenant une première application (320) et une deuxième application (330), ladite deuxième application comprenant au moins une vue, chaque dite au moins une vue comprenant une combinaison d'un ensemble d'éléments d'interface utilisateur d'entrée et un ensemble d'éléments d'interface utilisateur informationnels, chaque dite au moins une vue étant associée à ladite deuxième application, et **caractérisé en ce que** le programme informatique est apte à effectuer les étapes suivantes lorsqu'il est exécuté sur un système de traitement de données :
déterminer une liste de vues (400, 500) comprenant ladite au moins une vue ;
passer ladite liste de vues à un routeur de vues (300) à partir de ladite première application (310) ;
lancer ladite au moins une vue comprise dans ladite liste de vues (400, 500) dans ladite deuxième application, ledit lancement engendrant la présentation des éléments de ladite au moins une vue ; et
continuer ladite première application lorsqu'au moins une partie de ladite liste de vues (400, 500) a été traitée.

24. Programme informatique selon la revendication 23, dans lequel ledit programme informatique est stocké sur un support lisible par ordinateur.

25. Programme informatique selon la revendication 23, dans lequel ledit programme informatique est une carte de mémoire amovible.

26. Programme informatique selon la revendication 23, dans lequel ledit programme informatique est un disque magnétique ou optique.

27. Programme informatique selon la revendication 23, en outre apte à effectuer les étapes suivantes lorsqu'il est exécuté sur ledit système de traitement de données :
recueillir des données de ladite au moins une vue dans ladite liste de vues (400, 500) ; et passer lesdites données dudit routeur de vues à ladite première application (310) ou à une application suivante (330) dans ladite liste de vues.

28. Programme informatique selon la revendication 27, dans lequel ladite liste de vues comprend des informations identifiant au moins une application et une vue qui lui est associée.

29. Programme informatique selon la revendication 27, dans lequel lesdites données sont organisées dans une liste de journal comprenant une entrée pour chaque vue dans ladite liste de vues (400, 500).

30. Programme informatique selon la revendication 27, dans lequel lesdites données sont organisées dans une liste de paires de type et de valeur.

31. Programme informatique selon la revendication 30, dans lequel lesdites paires de type et de valeur de données sont dans un format de langage de marquage.

32. Programme informatique selon la revendication 23, dans lequel ledit programme informatique a une interface utilisateur graphique (840).

33. Programme informatique selon la revendication 32, dans lequel une vue est une fenêtre (840) ouverte au cours de ladite étape de présentation.

34. Programme informatique selon la revendication 23, dans lequel au moins une partie de ladite liste de vues est spécifiée dans la mémoire d'un dispositif électronique.

35. Programme informatique selon la revendication 23, dans lequel ladite liste de vues est déterminée sur la base d'actions d'utilisateur.

36. Programme informatique selon la revendication 23, dans lequel ledit programme informatique est conçu pour un dispositif à système d'exploitation SYMBIAN^{™}.

37. Programme informatique selon la revendication 23, dans lequel ledit routeur de vues (300) est compris dans une bibliothèque.

38. Programme informatique selon la revendication 23, dans lequel ledit routeur de vues (300) est une application.
